# EUROPEAN PATENT APPLICATION

(11) **EP 4 772 257 A1**
(43) Date of publication of application: **08.07.2026**
(21) Application number: 24218639.3
(22) Date of filing: 10.12.2024
(51) Int. Cl.: B01D 11/02, C01B 7/03, C01B 7/04, C01D 15/02, C01G 45/024, C01G 45/03, C01G 51/05, C01G 51/84, C01G 53/05, C01G 53/84, C22B 1/00, C22B 3/04, C22B 3/10, C22B 3/22, C22B 3/44, C22B 7/00, C22B 3/00, C22B 26/12, C22B 47/00, C25B 1/04

(54) **METHOD FOR RECYCLING LITHIUM BATTERIES**

(71) Applicant: ReMetall Deutschland AG, 01994 Drochow (DE)
(72) Inventor: Antonov, Andrey, 123060 Moscow (RU); Wegner, Rainer, 01968 Senftenberg (DE)
(74) Representative: Jeck, Jonathan

(57) **Abstract**

A method for extracting valuable components from the black mass of lithium electrodes is disclosed. The method involves vacuuming and distilling off impurity residues from the black mass, followed by converting metals in the black mass into a water-soluble form by autoclave electrochlorination in hydrochloric acid (HCl) with the imposition of alternating and direct currents. Subsequently, cobalt and nickel are electroplated on a cathode, with recondensation of HCl from the autoclave into a separate container for its reuse. The dry residue of chlorinated black mass is then treated with water and filtered to extract the remaining metals such as manganese and lithium. The filtrate is subjected to electrodialysis in a three-section cell of an electrolyzer for further extraction of valuable components.

## Description

The present disclosure pertains to the field of lithium-ion battery recycling, specifically the extraction of valuable components from the black mass of lithium electrodes. Lithium-ion batteries are widely used in various applications, including electric vehicles, due to their high energy density and long cycle life. However, the end-of-life management of these batteries presents a considerable challenge due to the complex composition of the batteries and the presence of valuable and potentially hazardous materials.

One of the main components of spent lithium-ion batteries is the black mass, which is a fine-grained product containing electrode coatings such as metal oxides and carbon. The black mass is rich in valuable metals like lithium, cobalt, nickel, and manganese, which are strategic elements for the production of new batteries. Therefore, efficient and environmentally friendly methods for the extraction of these valuable components from the black mass are of great interest.

Existing methods for the extraction of valuable components from the black mass often involve hydrometallurgical processes, which use aqueous acid solutions for leaching desired metals from the cathode material. For instance, the combination of sulfuric acid and hydrogen peroxide is commonly used for this purpose. However, these methods often require large volumes of acids and complexing agents, and involve numerous sequential operations, making them cumbersome and less efficient.

In relation to the method disclosed in US 2021/0032721 A1, the present method, as per claim 1, differs in its approach to the extraction of valuable components from the black mass. The method in US 2021/0032721 A1 involves the use of concentrated sulfuric acid for digestion of the comminuted material, followed by wet chemical extraction of metallic components. In contrast, the present method employs autoclave electrochlorination in hydrochloric acid. Electrodialysis for the extraction of valuable components, offering a more efficient and simplified process can be implemented.

Similarly, when compared to the method described in the report "Recycling of Lithium-Ion Batteries" within the framework of the R&D program "Promotion of Research and Development in the Field of Electromobility", the present method, as outlined in claim 1, introduces a novel method of autoclave electrochlorination and electrodialysis. The method in the report involves a combination of chemical separation and purification processes and electrochemical membrane dialysis, which can be complex and less profitable. In contrast, the present method aims to increase the profitability of the process by conducting processing in universal devices and increasing the degree of extraction of valuable components.

These comparisons are merely illustrative of the differences between the present method and some related prior art documents.

All aspects and instances according to the invention are combinable and are not to mistaken for separate approaches to the invention.

One benefit of the invention lies in the fact that less steps and less solvents can be used to reach separation of valuable metals also since the solvents can be reused.

In general, the method disclosed herein pertains to the extraction of valuable components from the black mass of lithium electrodes. This method involves providing the black mass from lithium electrodes, followed by vacuuming and distilling off impurity residues from the provided black mass. The metals in the vacuumed and distilled black mass are then converted into a water-soluble form preferably by autoclave electrochlorination in hydrochloric acid (HCl) with the imposition of alternating and direct currents.

In some aspects, the black mass is placed in an interelectrode space in contact with an anode, at a temperature between 100°C and 150°C and a pressure between 0.1 MPa and 1.5 MPa. Subsequently, (some) cobalt and nickel may be electroplated on a cathode, with recondensation of HCl from the autoclave into a separate container preferably for its reuse.

In further aspects, the dry residue of chlorinated black mass is treated with water and filtered to extract the remaining metals such as manganese and lithium. The filtrate may then be subjected to electrodialysis in a three-section (or more sections) cell of an electrolyzer, supplying the solution to a middle section, thus to a section not comprising the electrodes. The anode section, is adapted to extract Ni and Co in the form of hydroxide precipitate. Li may be extracted into the solution with subsequent filtration and evaporation to LiOH. In a cathode section, MnO2 may be extracted in the form of a precipitate and HCl is regenerated.

MnO2 is mainly formed during electrolysis at the anode and precipitates there or sinks to the bottom. It can be filtered out of the electrolysis solution. Residues that still enter the electrodialysis precipitate in the middle chamber of the cell as MnO2.

It is also possible to add a depleted or dissolved solution of metal chlorides or sulphates to the anode compartment. The MnO2 then precipitates there, Co(OH)2 and Ni(OH)2 then already precipitate in the middle chamber, Li then purifies itself via the middle compartment in the catholyte. In order to be able to reuse the anolyte (enriched hydrochloric or sulphuric acid), the anolyte must then be filtered off from the MnO2. On the other hand, there is less risk of contamination of the LiOH solution with Co, Ni, Mn.

The metal chloride mixture may be taken up in hydrochloric or sulphuric acid and filtered to remove graphite and other insoluble impurities. The solution, which is significantly less acidic than the electrolyte, is then added to the electrodialysis cell.

A three-chamber electrodialysis for the extraction of Lithiumhydroxide (LiOH) as described can be operated for example with 50 V and 19 A, unpressurized, room temperature (not higher than 40°C). The maximum current load on the membranes should preferably not exceed 4 A/dm2, as high current densities may cause the membranes to "burn out". It is recommended to preferably use stainless steel or copper electrodes as cathodes. To speed up the process, destilled water is first poured into the chambers that are not intended for loading the solution after electrolysis. It is recommended to acidify the distilled water with a 0.005 M solution of the corresponding acid. one may ensure that the solution level in the middle chamber, the loading chamber, is, preferably 1-2 cm, below the level of the catholyte and anolyte to prevent the solution from overflowing. The catholyte has a Li concentration of preferably 1-3 g/l, the bivalent cation solutions preferably have a concentration of 1-4 mg/l. The initial lithium concentration can be as high as required; the Li-concentration may result from the concentration of the autoclave solution.

In some instances, all the stages except of the electrodialysis are carried out in one reactor. The black mass may be obtained from lithium-ion batteries e.g. from electric vehicles. The valuable components extracted from the black mass may include at least one of lithium, cobalt, nickel, and manganese. The autoclave electrochlorination may be carried out at a temperature of 150°C and a pressure of 1.5 MPa. The dry residue of chlorinated black mass may be treated with water and filtered (directly) in the electrolyzer.

The cell, hence the electrolyzer, also called electrodialysis cell, is divided into three or more parts by two ion-conducting membranes into a cathode and anode chamber and a middle chamber. The chambers may also be called compartments. The base solution in the cathode chamber is alkaline, a weakly hydrochloric or sulphuric acid solution generated after digestion/chlorination of the Black Mass may be added to the middle chamber and a sulphuric acid solution may be added to the anode compartment. If an appropriate voltage of for example 50 V is applied at an appropriate current of for example 19 A, the ions Co2+, Ni2+ and Li+ migrate to the cathode (through the ion-conducting/ion-exchange membrane), while protons (H+) migrate to the anode in the opposite direction. Sulphate ions migrate to the anode, while hydroxyl-ions (OH-) migrates to the cathode. As a result, the cathode compartment becomes more and more alkaline and the anode compartment more and more acidic. The hydroxides of Co, hence Co(OH)2 and Ni(OH)2, therefore precipitate in the cathode chamber, only Li remains in solution.

In other aspects, the filtrate is subjected to electrodialysis in a three or more-section cell of the electrolyzer, supplying the solution to a middle section, thus to a section not comprising the electrodes. In the anode section, the extraction of Ni and Co in the form of hydroxide precipitate and extraction of Li into the solution with subsequent filtration and evaporation to LiOH, and in a cathode section - extraction of Manganeseoxide (MnO2) in the form of a precipitate and regeneration of HCl. The hydrochloric acid (HCl) recondensed from the autoclave may be reused in a new process after adjustment. The electrodialysis may be carried out at a current of 19 A and a voltage of 50 V.

**Black Mass:** A product typically obtained from spent lithium-ion batteries, which may include electrode coatings such as metal oxides and carbon. This material often contains valuable metals like lithium, cobalt, nickel, and manganese, although the exact composition can vary.

**(Autoclave) Electrochlorination:** A process that may involve the application of alternating and direct currents within an autoclave - a specialized pressure vessel to convert metals into a water-soluble form using hydrochloric acid (HCl), although other acids and methods may also be used depending on the specific requirements.

The resultant solution may contain between 0.7%-1% chlorine. Electrochlorination in HCl is the before mentioned process in the presence of HCl. An autoclave is a device used for processing materials and chemicals that need to be exposed to high temperatures and pressures.

**Interelectrode Space:** The space between the anode and cathode within an electrolyzer or similar electrochemical cell, where the black mass can be placed for processing, although alternative configurations may be employed.

**Electroplating:** A process that typically uses electric current to reduce dissolved metal cations, allowing them to form a coherent metal coating on an electrode. This method is commonly used for metals like cobalt and nickel, but other metals and methods may also be applicable.

Cobalt and Nickel precipitate in a weakly acidic medium at the cathode. The solution may be as enriched as possible. This may be achieved by distilling off the electrolyte. Deposition works best in a warm solution, e.g. at 70°C. The main amount of manganese remains undissolved as MnO2 (manganese dioxide). This might be helpful for the fine purification of the Li solution in order to prevent the membranes of the electrodialysis from being clogged by small MnO2 particles.

The fine purification of the Li solution is carried out by electrodialysis, in which the weakly acidic solution may be introduced into the central part of the cell. The cathode compartment contains an alkaline medium, while the anode compartment may contain for example diluted sulphuric or hydrochloric acid (both electrolytes are possible). During the electrolytic process, the cations Li+, Co2+, Ni2+, Mn2+ migrate to the cathode, sulphate ions to the anode, at the same time Hydronium-Ions (H3O+) migrate through the exchanger towards the anode, hydroxyl-Ions (OH-) migrate to the cathode. In the cathode compartment of the electrolyzer, hence the electroplating device, the hydroxides of Co, Ni and Mn precipitate in the alkaline medium, so that the solution contains only LiOH. Due to the digestion in the autoclave, manganese is present in oxidation state IV, so that it precipitates as MnO2 in the middle chamber of the cell.

**Electrodialysis:** An electrochemical process that generally uses a direct electric current and selectively permeable membranes to separate ions based on their properties. This method is often used to process the filtrate from the autoclave electrochlorination, but other separation processes may also be considered.

**Hydroxide Precipitate:** A solid material that typically forms in a solution during a chemical reaction and may fall out of solution. In this context, Ni and Co are often extracted as hydroxide precipitates during electrodialysis, although other forms of extraction may be used.

**Manganeseoxide (MnO2):** A compound that is usually a blackish or brown solid, occurring naturally as the mineral pyrolusite and as a component of manganese nodules. MnO2 is often extracted in the form of a precipitate during electrodialysis, but other extraction methods can be applicable.

**Reactor:** A device typically used to contain and control chemical reactions. In this method, it is common to carry out all stages in two reactors, the autoclave electrolyser and the electrodialysis cell.

**Recondensation:** The process of converting a gas or vapor back into a liquid, which is often done for hydrochloric acid (HCl) vapors from the autoclave. This process is typically used for the reuse of HCl, but other methods of acid recovery may also be considered.

According to an aspect of the method, the extraction of valuable components from the black mass of lithium electrodes may be achieved through a series of steps. Initially, the black mass from lithium electrodes is provided. This black mass may be obtained from various sources, such as spent lithium-ion batteries from electric vehicles or other electronic devices. The provided black mass then undergoes a process of vacuuming and distillation to remove impurity residues. This step may be carried out using general standard vacuuming and distillation techniques known in the art (not known to this specific process).

**Table 1. Content of components in the dry black mass (excluding lithium)**

| Element | Content, mass.% |
|---|---|
| Co | 11.3 |
| Ni | 11.0 |
| Mn | 11.2 |
| C | 43.4 |
| O | 16.0 |
| F | 7,1 |

Following the removal of impurities, the metals in the vacuumed and distilled black mass are converted into a water-soluble form. This conversion may be achieved by autoclave electrochlorination in hydrochloric acid (HCl) with the imposition of alternating and direct currents.

In some cases, the black mass may be placed in an interelectrode space in contact with an anode. The autoclave electrochlorination process may be carried out at a temperature between 100°C and 150°C and a pressure between 0.1 MPa and 1.5 MPa. In other cases, the autoclave electrochlorination may be carried out at a temperature of 150°C and a pressure of 1.5 MPa.

Subsequent to the autoclave electrochlorination process, cobalt and nickel may be electroplated on a cathode. This electroplating process may be carried out under conditions that allow for the recondensation of HCl from the autoclave into a separate container for its reuse. This step may contribute to the efficiency and sustainability of the method by reducing the consumption of HCl.

Following the electroplating of cobalt and nickel, the filtrate may be subjected to electrodialysis in a three or more-section cell of an electrolyzer. The solution may be supplied to a middle section of the electrolyzer. In an anode section, the extraction of Ni and Co in the form of hydroxide precipitate and extraction of Li into the solution may be carried out.

**Table 2. Example of the chemical composition of cathode precipitates***

| Element | Content, mass.% |
|---|---|
| From hydrochloric solution | |
| Co | 39 |
| Ni | 61 |

This may be followed by filtration and evaporation to obtain lithium hydroxide (LiOH). In a cathode section, Manganeseoxide (MnO2) may be extracted in the form of a precipitate and HCl may be regenerated. This electrodialysis process may be carried out at a current of 19 A and a voltage of 50 V.

In summary, the method provides a comprehensive and efficient approach for the extraction of valuable components from the black mass of lithium electrodes. By combining autoclave electrochlorination and electrodialysis processes, the method may offer improved extraction efficiency and sustainability compared to conventional methods.

According to one aspect of the method, the provided black mass from lithium electrodes may undergo a process of vacuuming and distillation to remove impurity residues. This step may be carried out using standard vacuuming and distillation techniques known in the art. The vacuuming process may involve the use of a vacuum pump or similar device to create a low-pressure environment, which facilitates the removal of volatile impurities from the black mass. The distillation process may involve heating the black mass to evaporate the volatile impurities, which are then condensed and collected separately. This process may result in a dry residue of chlorinated black mass.

In some cases, the dry residue of chlorinated black mass may be treated with water and filtered to extract the remaining metals such as manganese and lithium. The treatment process may involve adding water to the dry residue to dissolve the water-soluble metal chlorides. The resulting mixture may then be filtered to separate the dissolved metal chlorides from the insoluble components of the black mass. The filtration process may be carried out using standard filtration techniques known in the art, such as vacuum filtration or gravity filtration. The filtrate, which contains the dissolved metal chlorides, may then be subjected to further processing steps to extract the valuable metals.

According to one aspect of the method, the metals in the vacuumed and distilled black mass may be converted into a water-soluble form. This conversion may be achieved by autoclave electrochlorination in hydrochloric acid (HCl) with the imposition of alternating and direct currents. The autoclave electrochlorination process may be carried out at a temperature between 100°C and 150°C and a pressure between 0.1 MPa and 1.5 MPa. In some cases, the black mass may be placed in an interelectrode space in contact with an anode. In other cases, the autoclave electrochlorination may be carried out at a temperature of 150°C and a pressure of 1.5 MPa. This process may result in the conversion of metals into chlorides and a water-soluble form, facilitating their subsequent extraction.

In some cases, the filtrate obtained from the autoclave electrochlorination process may be subjected to electrodialysis in a three-section cell of an electrolyzer. The solution may be supplied to a middle section of the electrolyzer. In an anode section, the extraction of Ni and Co in the form of hydroxide precipitate and extraction of Li into the solution may be carried out. This may be followed by filtration and evaporation to obtain lithium hydroxide (LiOH). In a cathode section, Manganeseoxide (MnO2) may be extracted in the form of a precipitate and HCl may be regenerated. This electrodialysis process may be carried out at a current of 19 A and a voltage of 50 V.

In some cases, the dry residue of chlorinated black mass may be treated with water and filtered (directly) in the electrolyzer. The treatment process may involve adding water to the dry residue to dissolve the water-soluble metal chlorides. The resulting mixture may then be filtered to separate the dissolved metal chlorides from the insoluble components of the black mass. The filtration process may be carried out using standard filtration techniques known in the art, such as vacuum filtration or gravity filtration. The filtrate, which contains the dissolved metal chlorides, may then be subjected to further processing steps to extract the valuable metals.

In some cases, the black mass may be obtained from lithium-ion batteries, for example, from electric vehicles. These batteries, once spent, may be disassembled and the black mass separated for further processing. The black mass typically contains valuable metals such as lithium, cobalt, nickel, and manganese, which can be extracted and reused in the production of new batteries, thus contributing to the circular economy and sustainability in the battery production industry.

In some cases, the black mass may be placed in an interelectrode space in contact with an anode. This placement may facilitate the autoclave electrochlorination process, allowing for efficient conversion of metals in the black mass into a water-soluble form. The interelectrode space may be designed to accommodate the black mass and ensure its direct contact with the anode, thereby enhancing the electrochlorination process. The specific conditions under which the black mass is placed in the interelectrode space may vary depending on factors such as the composition of the black mass, the design of the autoclave, and the desired efficiency of the electrochlorination process.

In some instances, all the stages of the method except of electrodialysis for Li purification, including the provision of the black mass, vacuuming and distillation of impurity residues, autoclave electrochlorination, electroplating of cobalt and nickel, , may be carried out in one reactor. This configuration may offer several potential advantages, such as reduced equipment costs, simplified process control, and improved process efficiency. The reactor may be designed and configured to accommodate all the stages of the method, and may include features such as an interelectrode space for the placement of the black mass, a vacuuming and distillation system for the removal of impurity residues, an autoclave for the electrochlorination process, a cathode for the electroplating of cobalt and nickel.

In some cases, the hydrochloric acid (HCl) recondensed from the autoclave may be reused in a new process after adjustment. This reuse of HCl may contribute to the sustainability and cost-effectiveness of the method. The recondensed HCl may be collected in a separate container and then adjusted, for example, by dilution or concentration, to meet the requirements of the new process. The reuse of HCl may also reduce the environmental impact of the method by minimizing the consumption of fresh HCl and the generation of waste HCl.

According to one aspect of the method, following the autoclave electrochlorination process, cobalt and nickel may be electroplated on a cathode. This electroplating process may be carried out under conditions that allow for the recondensation of hydrochloric acid (HCl) from the autoclave into a separate container for its reuse. This step may contribute to the efficiency and sustainability of the method by reducing the consumption of HCl. The electroplating process may involve the application of an electric current, which drives the deposition of cobalt and nickel ions onto the cathode. The specific conditions under which the electroplating process is carried out may vary depending on factors such as the composition of the black mass, the design of the autoclave, and the desired efficiency of the electroplating process.

In some cases, the black mass may be obtained from lithium-ion batteries, for example, from electric vehicles. These batteries, once spent, may be disassembled and the black mass separated for further processing. The black mass typically contains valuable metals such as lithium, cobalt, nickel, and manganese, which can be extracted and reused in the production of new batteries, thus contributing to the circular economy and sustainability in the battery production industry.

In some instances, the filtrate obtained from the autoclave electrochlorination process may be subjected to electrodialysis in a three-section cell of an electrolyzer. The solution may be supplied to a middle section of the electrolyzer. In an anode section, the extraction of Ni and Co in the form of hydroxide precipitate and extraction of Li into the solution may be carried out. This may be followed by filtration and evaporation to obtain lithium hydroxide (LiOH). In a cathode section, Manganeseoxide (MnO2) may be extracted in the form of a precipitate and HCl may be regenerated. This electrodialysis process may be carried out at a current of 19 A, which may facilitate efficient extraction of the valuable metals from the filtrate.

In some instances, the dry residue of chlorinated black mass may be treated with water and filtered to extract the remaining metals such as manganese and lithium. This treatment process may involve adding water to the dry residue to dissolve the water-soluble metal chlorides. The resulting mixture may then be filtered to separate the dissolved metal chlorides from the insoluble components of the black mass. The filtration process may be carried out using standard filtration techniques known in the art, such as vacuum filtration or gravity filtration. The filtrate, which contains the dissolved metal chlorides, may then be subjected to further processing steps to extract the valuable metals.

In some cases, the valuable components extracted from the black mass may include at least one of lithium, cobalt, nickel, and manganese. These metals are of high value and are commonly used in the production of new batteries, thus their extraction from the black mass contributes to the circular economy and sustainability in the battery production industry.

In some instances, the filtrate obtained from the treatment of the dry residue of chlorinated black mass may be subjected to electrodialysis in a three-section cell of an electrolyzer. The solution may be supplied to a middle section of the electrolyzer. In an anode section, the extraction of Ni and Co in the form of hydroxide precipitate and extraction of Li into the solution may be carried out. This may be followed by filtration and evaporation to obtain lithium hydroxide (LiOH). In a cathode section, Manganeseoxide (MnO2) may be extracted in the form of a precipitate and HCl may be regenerated.

This electrodialysis process may be carried out at a voltage of 50 V. The application of this voltage may facilitate efficient extraction of the valuable metals from the filtrate. The specific voltage used may vary depending on factors such as the composition of the filtrate, the design of the electrolyzer, and the desired efficiency of the electrodialysis process.

According to one aspect of the method, the filtrate obtained from the treatment of the dry residue of chlorinated black mass may be subjected to electrodialysis in a three-section cell of an electrolyzer. In some cases, the dry residue of chlorinated black mass may be treated with water and filtered (directly) in the electrolyzer. This treatment process may involve adding water to the dry residue to dissolve the water-soluble metal chlorides. The resulting mixture may then be filtered to separate the dissolved metal chlorides from the insoluble components of the black mass. The filtration process may be carried out using standard filtration techniques known in the art, such as vacuum filtration or gravity filtration. The filtrate, which contains the dissolved metal chlorides, may then be subjected to further processing steps to extract the valuable metals.

In some instances, the filtrate may be subjected to electrodialysis in a three or more-section cell of the electrolyzer, supplying the solution to a middle section. The electrodialysis process may involve the migration of ions under the influence of an electric field, facilitating the separation and extraction of valuable metals from the filtrate. The specific configuration of the electrolyzer, including the number of sections and the arrangement of the sections, may vary depending on factors such as the composition of the filtrate, the desired efficiency of the electrodialysis process, and the specific requirements of the method.

In the anode section of the electrolyzer, the extraction of Ni and Co in the form of hydroxide precipitate and extraction of Li into the solution may be carried out. This process may involve the migration of Ni and Co ions towards the anode under the influence of the electric field, resulting in the formation of hydroxide precipitates. The Li ions may also migrate towards the anode, resulting in their extraction into the solution. The extraction of Ni, Co, and Li may be followed by filtration and evaporation to obtain lithium hydroxide (LiOH).

In a cathode section of the electrolyzer, Manganeseoxide (MnO2) may be extracted in the form of a precipitate and hydrochloric acid (HCl) may be regenerated. The extraction of MnO2 may involve the migration of Mn ions towards the cathode under the influence of the electric field, resulting in the formation of a MnO2 precipitate. The regeneration of HCl may involve the reaction of the remaining H+ ions with Cl- ions in the cathode section, resulting in the formation of HCl. The regenerated HCl may then be collected and reused in subsequent processes, contributing to the sustainability and efficiency of the method.

According to one aspect of the method, the filtrate obtained from the autoclave electrochlorination process may be subjected to electrodialysis in a three-section cell of an electrolyzer. The solution may be supplied to a middle section of the electrolyzer. In an anode section, the extraction of Ni and Co in the form of hydroxide precipitate and extraction of Li into the solution may be carried out. This process may involve the migration of Ni and Co ions towards the anode under the influence of the electric field, resulting in the formation of hydroxide precipitates. The Li ions may also migrate towards the anode, resulting in their extraction into the solution. The extraction of Ni, Co, and Li may be followed by filtration and evaporation to obtain lithium hydroxide (LiOH).

In a cathode section of the electrolyzer, Manganeseoxide (MnO2) may be extracted in the form of a precipitate and hydrochloric acid (HCl) may be regenerated. The extraction of MnO2 may involve the migration of Mn ions towards the cathode under the influence of the electric field, resulting in the formation of a MnO2 precipitate. The regeneration of HCl may involve the reaction of the remaining H+ ions with Cl- ions in the cathode section, resulting in the formation of HCl. The regenerated HCl may then be collected and reused in subsequent processes, contributing to the sustainability and efficiency of the method.

In some cases, the hydrochloric acid (HCl) recondensed from the autoclave may be reused in a new process after adjustment. This reuse of HCl may contribute to the sustainability and cost-effectiveness of the method. The recondensed HCl may be collected in a separate container and then adjusted, for example, by dilution or concentration, to meet the requirements of the new process. The reuse of HCl may also reduce the environmental impact of the method by minimizing the consumption of fresh HCl and the generation of waste HCl.

In some instances, the filtrate obtained from the treatment of the dry residue of chlorinated black mass may be subjected to electrodialysis in a three-section cell of an electrolyzer. The solution may be supplied to a middle section of the electrolyzer. The electrodialysis process may involve the migration of ions under the influence of an electric field, facilitating the separation and extraction of valuable metals from the filtrate. The specific voltage used may vary depending on factors such as the composition of the filtrate, the design of the electrolyzer, and the desired efficiency of the electrodialysis process. In some cases, the electrodialysis may be carried out at a current of 19 A and a voltage of 50 V, which may facilitate efficient extraction of the valuable metals from the filtrate.

The provided headlines are for orientation purposes only. The disclosure in each of those sections in generally applicable to the invention even with respect to other process aspects.

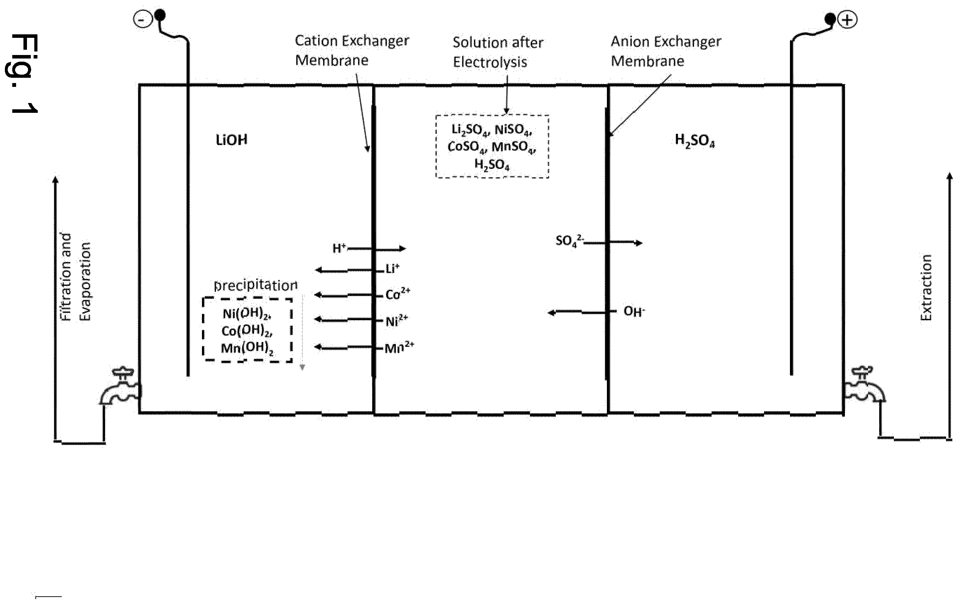

In an experimental laboratory setup, a method of electroextraction of lithium by electrodialysis was used, the basic scheme of which is shown in Fig. 1 as a three-section bath for conducting electrodialysis.

The three-section bath for conducting electrodialysis is divided by cation exchange and anion exchange membranes, respectively.

The electrodialysis method may involve loading the solution after electrolysis into the middle space.

The migration of lithium, cobalt, nickel, and manganese cations will occur into the cathode space, separated by a cation exchange membrane. With an increase in pH in the cathode space and due to the low solubility, the formed hydroxides Ni(OH)2, Co(OH)2 and Mn(OH)2 will precipitate (fig. 1). The obtained catholyte may then be filtered and evaporated to obtain lithium hydroxide.

Chloride anions and a small amount of manganate anions, which formed as a result of the oxidation of Mn(II) at the anode during electrolysis, will migrate into the anode space through the anion exchange membrane. The obtained anolyte, representing a solution of hydrochloric acid, can possibly be returned to the technological cycle at the leaching stage. The impurity of manganese acid is unstable and decomposes over time to MnO2 (fig. 1).

Since the degree of extraction in the catholyte and anolyte decreases as the difference in pH of the solutions increases, it is advisable to periodically replace, at least, the catholyte with its subsequent evaporation. The intermediate analysis of the catholyte solutions after 2 hours of electrodialysis in the installation at a current of 19 A shows a low content of impurities. With three to four changes of the catholyte, it is possible to achieve a degree of extraction of Li close to 100%.

**Table 3. Chemical composition of catholyte solutions***

| Element | Content, mg/l |
|---|---|
| Sulfuric acid solution | |
| Li | 1023/3205 |
| Co | 1,9 |
| Ni | 4,1 |
| Mn | < 1,0 |

| Hydrochloric acid solution | |
|---|---|
| Li | 1012/3400 |
| Co | 2,9 |
| Ni | 2,6 |
| Mn | less then 1,0 |

| | |
|---|---|
| * Values are given to the initial volume | |

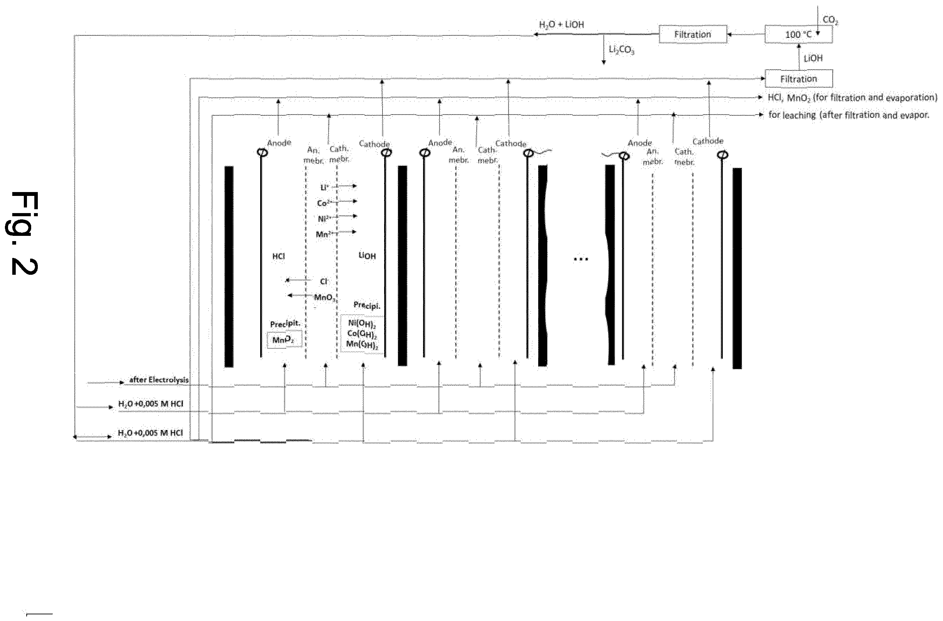

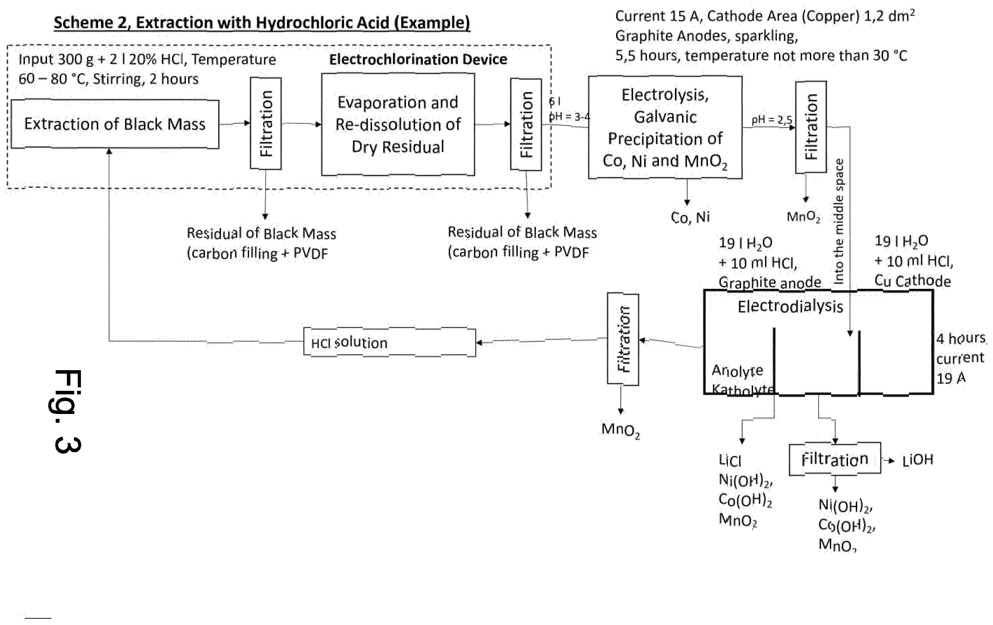

Fig. 2 shows a possible setup for a continuous flow setup of the inventive method.

## Claims

1. A method for extracting valuable components from the black mass of lithium electrodes, the method comprising: providing the black mass from lithium electrodes; vacuuming and distilling off impurity residues from the provided black mass; converting metals in the vacuumed and distilled black mass into a water-soluble form by autoclave electrochlorination in hydrochloric acid (HCl) with the imposition of alternating and direct currents.

2. The method of claim 1, wherein the black mass is placed in an interelectrode space in contact with an anode, at a temperature between 100°C and 150°C and a pressure between 0.1 MPa and 1.5 MPa.

3. The method of claim 1, wherein cobalt and nickel are subsequently electroplated on a cathode, with recondensation of HCl from the autoclave into a separate container for its reuse.

4. The method of claim 3, wherein the residue of chlorinated black mass is dried and treated with water and filtered to extract the remaining metals such as manganese and lithium.

5. The method of claim 4, wherein the filtrate is subjected to electrodialysis in a three-section cell of an electrolyzer, supplying the solution to a middle section, and wherein in an anode section, Ni and Co are extracted in the form of hydroxide precipitate and Li is extracted into the solution with subsequent filtration and evaporation to LiOH, and in a cathode section, MnO2 is extracted in the form of a precipitate and HCl is regenerated.

6. The method of claim 1, wherein all the stages are carried out in two reactors.

7. The method of claim 1, wherein the black mass is obtained from lithium-ion batteries e.g. from electric vehicles.

8. The method of claim 1, wherein the valuable components extracted from the black mass include at least one of lithium, cobalt, nickel, and manganese.

9. The method of claim 1, wherein the autoclave electrochlorination is carried out at a temperature of 150°C and a pressure of 1.5 MPa.

10. The method of claim 1, wherein the dry residue of chlorinated black mass is treated with water and filtered directly in an electrolyzer.

11. The method of claim 4, wherein the filtrate is subjected to electrodialysis in a three or more-section cell of an electrolyzer, supplying the solution to a middle section, wherein in the anode section, the extraction of Ni and Co in the form of hydroxide precipitate and extraction of Li into the solution with subsequent filtration and evaporation to LiOH, and in a cathode section - extraction of Manganese oxide (MnO2) in the form of a precipitate and regeneration of HCl.

12. The method of claim 1, wherein the hydrochloric acid (HCl) recondensed from the autoclave is reused in a new process after adjustment.

13. The method of claim 5 and 11, wherein the electrodialysis is carried out at a current of 19 A.

14. The method of claim 5 and 11, wherein the electrodialysis is carried out at a voltage of 50 V.
